# EUROPÄISCHE PATENTSCHRIFT

(11) **EP 3 592 492 B1**
(45) Veröffentlichungstag und Bekanntmachung des Hinweises auf die Patenterteilung: **28.09.2022**
(21) Anmeldenummer: 18710006.0
(22) Anmeldetag: 06.03.2018
(51) Int. Cl.: B23F 23/12, B23F 19/06, B24B 53/075

(54) **WERKZEUG ZUM VERZAHNEN ODER ABRICHTEN EINES EINE AUSSENVERZAHNUNG AUFWEISENDEN FEINBEARBEITUNGSWERKZEUGS**
TOOL FOR CUTTING TEETH OR FOR DRESSING A FINE MACHINING TOOL HAVING A SET OF EXTERNAL TEETH
OUTIL DESTINÉ À TAILLER EN DÉVELOPPANTE OU À DRESSER UN OUTIL DE FINITION COMPRENANT UNE DENTURE EXTÉRIEURE

(30) Priorität: 06.03.2017 DE 102017104625
(43) Veröffentlichungstag der Anmeldung: 15.01.2020
(73) Patentinhaber: Präwema Antriebstechnik GmbH, 37269 Eschwege/Werra (DE)
(72) Erfinder: SCHIEKE, Jörg, 99092 Erfurt-Marbach (DE); HOLDERBEIN, Walter, 37269 Eschwege (DE)
(74) Vertreter: Cohausz & Florack
(86) Internationale Anmeldenummer: PCT/EP2018/055476
(87) Internationale Veröffentlichungsnummer: WO 2018/162484

(56) Entgegenhaltungen:
- WO-A1-2008/156078
- DE-A1- 2 719 524
- JP-A- H07 124 820
- US-A- 3 147 535

## Beschreibung

Die Erfindung betrifft ein Werkzeug zum Verzahnen oder Abrichten eines eine Außenverzahnung aufweisenden Feinbearbeitungswerkzeugs für die Feinbearbeitung von Werkstücken.

Dazu ist ein Werkzeug der hier in Rede stehenden Art ringförmig ausgebildet und weist eine Innenverzahnung auf, deren Zähne bei der Bearbeitung mit der Außenverzahnung des zu verzahnenden oder abzurichtenden Feinbearbeitungswerkzeugs in Eingriff kommen. Dabei rotiert das Werkzeug während der Bearbeitung um eine durch den Mittelpunkt der von ihm umgrenzten Öffnung verlaufende zentrale Längsachse.

Die mittels eines erfindungsgemäßen Werkzeuges abzurichtenden oder zu profilierenden Feinbearbeitungswerkzeuge dienen beispielsweise zum Feinschleifen oder Honen von Werkstücken, bei denen es sich wiederum typischerweise um Zahnräder, Zahnstangen oder vergleichbare Bauteile handelt.

Üblicherweise sind die hier in Rede stehenden Feinbearbeitungswerkzeuge als keramisch- oder harzgebundene Werkzeuge hergestellt, an denen eine Verzahnung ausgebildet ist, deren Gestalt der Form mit der zu bearbeitenden Verzahnung korrespondiert. Im Zuge der jeweiligen Feinbearbeitung kommt es zu Verschleiß am Feinbearbeitungswerkzeug. Um sicherzustellen, dass die am zu bearbeitenden Werkstück durch die Feinbearbeitung zu erzeugenden Formelemente, d.h. beispielsweise einer Verzahnung, an ihre Präzision gestellten Anforderungen genügen, müssen die Feinbearbeitungswerkzeuge daher in bestimmten Zeitabständen abgerichtet werden. Durch den Abrichtvorgang wird das Feinbearbeitungswerkzeug in einen Zustand versetzt, in dem eine optimale Präzision des Bearbeitungsergebnisses bei gleichzeitig hoher Abtragleistung gewährleistet ist.

Werkzeuge der hier in Rede stehenden Art lassen sich jedoch nicht nur zum wiederholten Abrichten von mit einer entsprechenden Verzahnungsgeometrie versehenen Feinbearbeitungswerkzeugen einsetzen. Vielmehr können sie auch dazu genutzt werden, ungebrauchte Feinbearbeitungswerkzeuge, welche im Anlieferungszustand nur mit einer Grobverzahnung versehen sind, mit dem für die ihnen jeweils zugedachte Feinbearbeitungsaufgabe benötigten Verzahnungsprofil zu versehen. Bei diesem auch als "Profilieren" bezeichneten Vorgang wird mittels des Werkzeugs in die Grobverzahnung des neuen Feinbearbeitungswerkzeugs die jeweils geforderte Zahngeometrie eingearbeitet.

Für das Abrichten oder Profilieren der Feinbearbeitungswerkzeuge werden üblicherweise Werkzeuge eingesetzt, in die das Profil des abzurichtenden Werkzeugs eingearbeitet ist. Zusätzlich können in das Werkzeug Formelemente eingearbeitet sein, welche benötigt werden, um die gegebenenfalls erforderlichen Geometrieänderungen am abzurichtenden Werkzeug zu erzeugen.

Im Zuge des Abricht- oder Verzahnungsvorgangs werden üblicherweise das Werkzeug und das abzurichtende oder zu profilierende Feinbearbeitungswerkzeug in Eingriff gebracht und das Profil bzw. die Geometrie des Werkzeugs auf das abzurichtende Feinbearbeitungswerkzeug übertragen.

Als Alternative zu diesem konventionellen Vorgehen ist in der EP 2 036 675 B1 ein Werkzeug zum Abrichten von Feinbearbeitungswerkzeugen vorgeschlagen, an dem ein Abrichtrad mit einer Zahngeometrie vorgesehen ist, bei der mindestens die Zähne aus einem Diamantwerkstoff gefertigt sind, wobei die Dicke des Abrichtrads im Bereich der mit dem abzurichtenden Werkzeug in Eingriff kommenden Verzahnung wesentlich geringer ist als die Dicke des jeweils zu bearbeitenden Zahns des Feinbearbeitungswerkzeugs. Konkret ist die Dicke des Abrichtrades auf maximal 1,2 mm beschränkt. Die geringe Dicke des Abrichtrades und die Eigenschaften des Diamantwerkstoffs erlauben es, das Abrichtrad im Zuge des Abrichtvorgangs bei in Eingriff befindlichem Abrichtrad und abzurichtendem Feinbearbeitungswerkzeug unabhängig von der Form der jeweils zu bearbeitenden Zähne in einer weitestgehend frei steuerbaren Bewegung entlang der Zahnflanken des abzurichtenden Werkzeugs zu bewegen. D.h., das Abrichtrad selbst verfügt nicht über die am Feinbearbeitungswerkzeug abzubildende Zahngeometrie. Vielmehr wird diese durch eine entsprechende Steuerung des Abrichtrades während der Abrichtbearbeitung erzeugt. Auf diese Weise lassen sich bei gerad- oder schrägverzahnten sowie bei in anderer Weise komplex geformt verzahnten Werkzeugen die jeweils erforderlichen Schrägungswinkel bzw. die jeweils abzubildende Zahnform allein durch die Bewegung bestimmen, die das Abrichtrad bei seinem Weg entlang der Zahnflanke des Zahns ausführt, mit dem es jeweils in Eingriff steht.

Auch das in der WO 2011/157830 A1 beschriebene Verfahren zum Profilieren eines Honwerkzeugs für die Honbearbeitung einer Verzahnung eines Werkstücks beruht auf der Verwendung eines Profilierwerkzeugs mit einer Dicke, die wesentlich geringer ist als die Dicke der jeweils zu profilierenden Verzahnung. Bei diesem Verfahren werden ein ringförmiges, unfertig profiliertes Hohnwerkzeug in einen zum Halten des Honwerkzeugs während der Honbearbeitung eines Werkstücks bestimmten Halter einer Honmaschine und ein Profilierwerkzeug in der Werkstückspindel der Honmaschine eingespannt.

Dabei ist das Profilierwerkzeug nach Art eines schmalen, scheibenförmigen Zahnrads ausgebildet, dessen im Sinne der im vorliegenden Text so zu bezeichnende, achsparallel zur zentralen Längsachse des Profilierwerkzeugs gemessene Dicke geringer ist als die Breite des an dem Honwerkzeug zu erzeugenden Verzahnungsprofils. Das so gestaltete Profilierwerkzeug und das zu profilierende Honwerkzeug werden dann relativ zueinander derart bewegt, dass das Profilierwerkzeug in Eingriff mit dem Honwerkzeug kommt und an dem Honwerkzeug das für die Honbearbeitung der Verzahnung des Werkstücks erforderliche Verzahnungsprofil abbildet, wobei das schmale Profilierwerkzeug zur Erzeugung der Flankenlinie der Zähne des zu profilierenden Honwerkzeugs während der Profilierbearbeitung in Richtung der Werkstückachse (Z-Richtung) geführt wird.

In den beiden voranstehend erläuterten Patentveröffentlichungen EP 2 036 675 B1 und WO 2011/157830 A1 sind jeweils Ausführungsbeispiele für Abricht- oder Profilierwerkzeuge vorgestellt worden, die mit einer Außenverzahnung versehen sind.

Vor diesem Hintergrund hat sich die Aufgabe ergeben, ein Werkzeug zum Abrichten oder Verzahnen von Feinbearbeitungswerkzeugen zu schaffen, das mit einer Innenverzahnung versehen ist und mit geringem Aufwand die exakte Abbildung der jeweils geforderten Zahngeometrie am abzurichtenden oder zu verzahnenden Feinbearbeitungswerkzeug ermöglicht.

Die Erfindung hat diese Aufgabe durch ein Werkzeug mit den in Anspruch 1 angegebenen Merkmalen gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Werkzeug zum Verzahnen oder Abrichten eines eine Außenverzahnung aufweisenden Feinbearbeitungswerkzeugs für die Feinbearbeitung von Werkstücken, ist demnach wie die eingangs erwähnten, aus dem Stand der Technik bekannten Werkzeuge dieser Art ringförmig ausgebildet und weist eine Innenverzahnung auf, deren Zähne beim Verzahnungs- oder Abrichtvorgang mit der Außenverzahnung des zu verzahnenden oder abzurichtenden Feinbearbeitungswerkzeugs in Eingriff kommen, wobei das Werkzeug eine durch den Mittelpunkt der von ihm umgrenzten Öffnung verlaufende zentrale Längsachse aufweist.

Erfindungsgemäß ist nun die Innenverzahnung an einem Ringelement ausgebildet, das aus einem Diamantwerkstoff gefertigt ist, dessen parallel zur zentralen Längsachse gemessene Dicke höchstens 5 mm beträgt, wobei die Zähne der Innenverzahnung Schneiden aufweisen, mit denen sie bei der Verzahnungs- oder Abrichtbearbeitung Material des Feinwerkzeugs abtragen, und wobei das Ringelement von einem Tragring getragen ist, an dem mindestens ein der Tragringöffnung des Tragrings zugeordnetes Stützelement vorgesehen ist, an dem das Ringelement abgestützt ist und über dessen der Tragringöffnung zugewandte Kante die Zähne der am Ringelement ausgebildeten Innenverzahnung mindestens über einen Teil der Länge ihrer Schneiden in Richtung der zentralen Längsachse des Werkzeugs hinausstehen.

Die Erfindung greift damit die in der EP 2 036 675 B1 und WO 2011/157830 A1 beschriebene Gestaltung von Abricht- und Verzahnungswerkzeugen auf und gestaltet dazu ein erfindungsgemäßes Werkzeug derart, dass es das aus einem Diamantwerkstoff bestehende, seine Innenverzahnung bildende dünne Ringelement sicher abstützen kann. Dazu ist an dem erfindungsgemäß vorgesehenen Tragring ein Stützelement vorgesehen, das das Ringelement mit seiner Innenverzahnung so abstützt, das es sicher gehalten ist, die Zähne der Innenverzahnung aber frei in die von dem Tragring mit dem Ringelement umgebene Ringöffnung ragen, so dass sie frei in das Material des zu bearbeitenden Feinbearbeitungswerkzeugs greifen können.

Wie beim in der EP 2 036 675 B1 und WO 2011/157830 A1 beschriebenen Stand der Technik, ermöglicht auf diese Weise auch das erfindungsgemäße Werkzeug, die am jeweils bearbeiteten Feinbearbeitungswerkzeug zu erzeugende Zahngeometrie alleine durch eine geeignete Bewegung des Werkzeugs abzubilden.

Zu diesem Zweck ist das erfindungsgemäß mit der Innenverzahnung versehene, aus einem Diamantwerkstoff gefertigte Ringelement möglichst dünn. D.h., es weist eine möglichst geringe Dicke auf, so dass es nach Art einer Messerschneide geformt ist. Dementsprechend beträgt die parallel zur zentralen Längsachse gemessene Dicke des Ringelements höchstens 5 mm, wobei geringere Dicken von höchstens 4,5 mm, höchstens 4 mm oder höchstens 3,5 mm sich als besonders vorteilhaft erweisen.

Die bei der Herstellung des Ringelements weiter zu beachtenden Parameter und sonstigen Einflussgrößen sind prinzipiell bereits in der EP 2 036 675 B1 und WO 2011/157830 A1 beschrieben.

Gemäß einer die Herstellung und Montage eines erfindungsgemäßen Werkzeugs erheblich vereinfachende Ausgestaltung ist das aus dem Diamantwerkstoff bestehende Ringelement aus Ringsegmenten zusammengesetzt, die sich jeweils über einen Abschnitt des Umfangs des Ringelements erstrecken. Die Ringsegmente können jede geeignete Form aufweisen, die eine einfache Befestigung an dem Tragring ermöglicht. Wesentlich ist nur, dass die an ihnen ausgebildete Verzahnung bei aus den Ringsegmenten fertig zusammengesetztem Ringelement gemeinsam die Innenverzahnung bilden, die die am zu bearbeitenden Werkstück abzubildende Zahngeometrie darstellt. Eine einfache Gestalt des Tragrings oder des an ihm vorgesehenen Stützelements ergibt sich hier dann, wenn die Ringsegmente bogenförmig ausgebildet sind, also jeweils einen Teilkreis des von dem Ringelement überstrichenen Kreises überstreichen.

Bei einer segmentierten Ausführung des Ringelements lässt sich die Herstellung der einzelnen Ringsegmente dadurch vereinfachen, dass die Ringsegmente identisch geformt sind. Bei einer bogenförmigen Gestaltung der Ringsegmente können sie sich dazu über jeweils den gleichen Winkelbereich erstrecken.

Grundsätzlich ist es bei einer segmentierten Ausführung des Ringelements möglich, die einzelnen Ringsegmente in Umfangsrichtung beabstandet zu einander anzuordnen, solange die an ihnen vorhandenen Zähne gemeinsam die vorschriftsmäßige Innenverzahnung bilden. Ein sicherer und exakter Sitz der Ringsegmente lässt sich jedoch auf einfache Weise dadurch gewährleisten, dass benachbart angeordnete Ringsegmente mit ihren einander zugeordneten Seitenflächen dicht aneinander anliegen.

Um die Geometrie der Zähne der Innenverzahnung eines erfindungsgemäßen Werkzeugs bei einer segmentierten Ausführung des Ringelements nicht zu stören, kann die zwischen benachbart angeordneten Ringsegmenten vorhandene Trennfuge jeweils im Bereich einer zwischen zwei benachbarten Zähnen der Innenverzahnung vorhandenen Zahnlücke angeordnet werden.

Das bei einem erfindungsgemäßen Werkzeug vorgesehene Stützelement stellt sicher, dass das filigrane Ringelement während des Bearbeitungsbetriebs so am Tragring abgestützt ist, dass es den auf ihn lastenden Kräften sicher standhält. Hierzu hat es sich als vorteilhaft erwiesen, wenn das Stützelement, an dem das die Innenverzahnung aufweisende Ringelement abgestützt ist, als um die Tragringöffnung umlaufender Absatz ausgebildet ist.

Das Stützelement kann als ein separat gefertigtes und geeignetes Stützelement am Tragring befestigt werden. Das Stützelement kann dabei bereits im Moment der Montage mit dem Ringelement bestückt sein. Alternativ dazu lässt sich das Stützelement jedoch auch aus einem Stück mit dem Tragring ausbilden. Dazu kann beispielsweise in den derart mit dem Stützelement einstückig ausgebildeten Tragring als Stützelement ein geeignet geformter Absatz eingeformt sein.

Der Tragring kann aus jedem geeigneten Werkstoff bestehen, dessen mechanische Eigenschaften den im Bearbeitungsbetrieb auftretenden Belastungen entsprechen. Hierzu geeignete Werkstoffe sind insbesondere die im Stand der Technik für diese Zwecke bekannten Stahlwerkstoffe.

Als Diamantwerkstoff für das Ringeelement kommen die insbesondere in der EP 2 036 675 B1 und WO 2011/157830 A1 genannten Werkstoffe in Frage.

Das Ringelement bzw. seine Ringsegmente können in jeder geeigneten Form an dem Stützelement gehalten sein. Besonders kostengünstig lässt sich dieser Halt dadurch bewerkstelligen, dass das Ringelement oder seine Segmente mit dem Stützelement stoffschlüssig verbunden sind, insbesondere mit dem Stützelement verklebt sind. Alternativ oder ergänzend können das Ringelement oder seine Ringsegmente auch mechanisch durch Kraftschluss mit dem Stützelement verkoppelt sein. Hierzu bietet sich erforderlichenfalls eine Verklemmung durch gegen das Stützelement oder den Tragring verspannte Klemmelemente an.

Alternativ oder ergänzend zu einer Befestigung an dem Stützelement können das Ringelement oder seine Segmente in der voranstehend erläuterten Weise auch mit dem Tragring verbunden sein, wenn sich dies als zweckdienlich herausstellt.

Nachfolgend wird die Erfindung anhand einer ein Ausführungsbeispiel darstellenden Zeichnung näher erläutert. Deren Figuren zeigen jeweils schematisch:

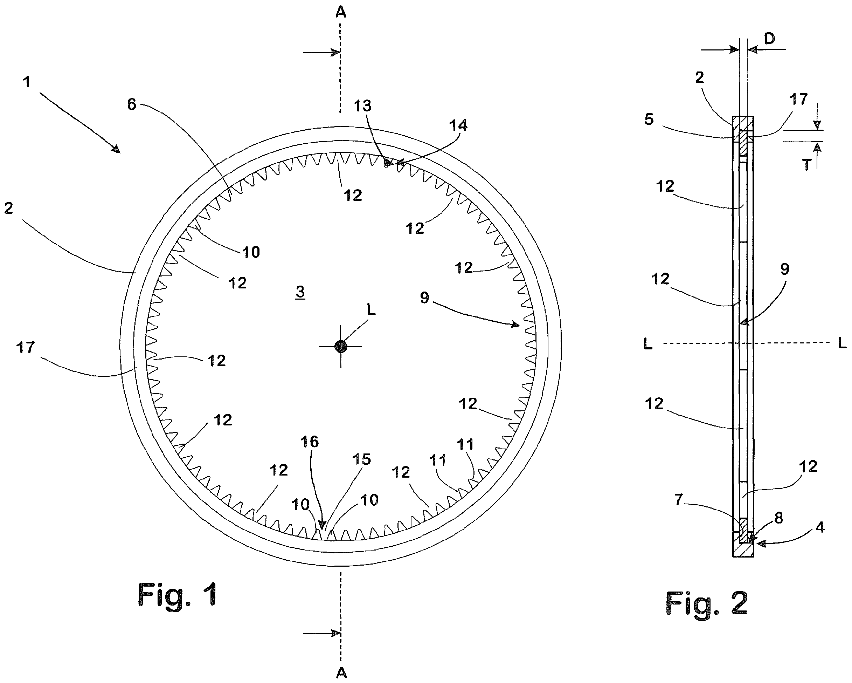

- Fig. 1: ein Werkzeug zum Abrichten oder Verzahnen eines außenverzahnten Honbearbeitungswerkzeugs in frontaler Ansicht;
- Fig. 2: das Werkzeug gemäß Fig. 1 in einem Schnitt entlang der in Fig. 1 eingezeichneten Schnittlinie A-A;

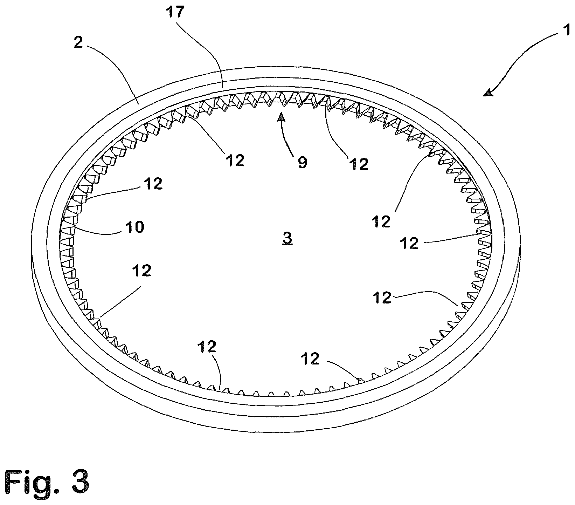

- Fig. 3: das Werkzeug in einer perspektivischen Ansicht von oben;

Das Werkzeug 1 umfasst einen aus einem geeigneten Stahlwerkstoff geformten Tragring 2, der eine zentrale Längsachse L umläuft und eine Tragringöffnung 3 umgrenzt. Die zentrale Längsachse L ist dabei konzentrisch zur Tragringöffnung 3 ausgerichtet.

In den der Tragringöffnung 3 zugeordneten Randbereich ist ausgehend von der einen Stirnseite 4 des Tragrings 2 ein umlaufender Absatz eingeformt. Dieser umlaufende Absatz bildet ein einstückig mit dem Tragring 2 ausgebildetes Stützelement 5 für ein Ringelement 6, das auf der normal zur Längsachse L ausgerichteten Absatzfläche 7 des Stützelements 5 sitzt und gleichzeitig an der dem Stützelement 5 zugewandten Innenumfangsfläche 8 des Tragrings 2 dicht anliegt. Das Ringelement 6 ist auf dieser Weise formschlüssig innerhalb des Tragrings 2 gehalten. Der dauerhaft feste Sitz des Ringelements 6 in dem Tragring 2 ist dabei durch eine Verklebung des Tragrings 2 mit der Absatzfläche 7 des Stützelements 5 gewährleistet. Zusätzlich ist von der Stirnseite 4 her ein Klemmring 17 auf das Ringelement 6 gesetzt, um den Halt des Ringelements 6 auch durch Klemmwirkung zu sichern.

Das Ringelement 6 weist an seinem der Tragringöffnung 3 zugeordneten Innenumfang eine Innenverzahnung 9 auf, die aus in gleichmäßigen Winkelabständen um das Zentrum des Ringelements 6 verteilt angeordneten Zähnen 10 gebildet ist. Die Tiefe T der Absatzfläche 7 ist dabei so bemessen, dass die Zähne 10 der Innenverzahnung 9 frei über die der Tragringöffnung 3 zugewandten Kante des Stützelements 5 hinausstehen.

Die Zähne 10 weisen an ihren Zahnflanken und gegebenenfalls auch an ihrem Zahnkopf jeweils eine Schneide 11 auf, mit der sie bei der Bearbeitung am zu bearbeitenden, hier nicht gezeigten Honwerkzeug Material abtragen.

Dies wird dadurch ermöglicht, dass die parallel zur Längsachse L gemessene Dicke D des Ringelements 6 mit 3,2 mm wesentlich geringer ist als die Dicke der Zähne der Außenverzahnung des zu bearbeitenden Honwerkzeugs.

Das Ringelement 6 ist aus neun bogenförmig gestalteten Ringsegmenten 12 zusammengesetzt, die jeweils identisch gestaltet sind und sich über jeweils ein Neuntel des von dem Ringelement 6 abgedeckten Ringumfangs erstrecken. Dabei sind die Ringsegmente 12 so geformt und dimensioniert, dass benachbarte Ringsegmente 12 jeweils mit ihren einander zugewandten Schmalseiten 13,14 dicht aneinander anliegen. Die zwischen den Ringsegmenten 12 vorhandenen Trennfugen 15 sind dabei jeweils im Bereich einer Zahnlücke 16 zwischen zwei benachbarten Zähnen 10 angeordnet und stören dementsprechend die Zahngeometrie nicht.

Bei dem Diamantwerkstoff des Ringsegments 6 handelt es sich beispielsweise um synthetischen Diamant, die als Schneidstoffschicht auf eine vorzugsweise aus einem Hartmetallwerkstoff bestehende Trägerschicht aufgebracht ist.

Im Einzelnen erfolgt die Herstellung des Ringsegments 6 in der an sich bekannten, in der EP 2 036 675 B1 und WO 2011/157830 A1 jeweils beschriebenen Weise.

Mit der Erfindung steht somit ein Werkzeug 1 zum Abrichten oder Verzahnen von Feinbearbeitungswerkzeugen zur Verfügung, das mit geringem Aufwand die exakte Abbildung der jeweils geforderten Zahngeometrie am abzurichtenden oder zu verzahnenden Feinbearbeitungswerkzeug ermöglicht. Dabei ist das Werkzeug 1 ringförmig ausgebildet und weist eine Innenverzahnung 9 auf, deren Zähne 10 beim Verzahnungs- oder Abrichtvorgang mit der Außenverzahnung des zu verzahnenden oder abzurichtenden Feinbearbeitungswerkzeugs in Eingriff kommen. Gleichzeitig besitzt das Werkzeug 1 eine durch den Mittelpunkt der von ihm umgrenzten Öffnung 3 verlaufende zentrale Längsachse L.

Erfindungsgemäß ist nun die Innenverzahnung 9 an einem höchstens 5 mm dicken und aus einem Diamantwerkstoff gefertigten Ringelement 6 ausgebildet. Die Zähne 10 der Innenverzahnung 9 haben Schneiden 11, mit denen sie bei der Verzahnungs- oder Abrichtbearbeitung Material des Feinwerkzeugs abtragen. Dabei ist das Ringelement 6 von einem Tragring 2 getragen, an dem mindestens ein der Tragringöffnung 3 des Tragrings 2 zugeordnetes Stützelement 5 vorgesehen ist. An diesem Stützelement 5 ist das Ringelement 6 abgestützt. Über die der Tragringöffnung 3 zugewandte Kante des Stützelements 5 stehen die Zähne 10 der am Ringelement 6 ausgebildeten Innenverzahnung 9 mindestens über einen Teil der Länge ihrer Schneiden 11 in Richtung der zentralen Längsachse L des Werkzeugs 1 hinaus.

### BEZUGSZEICHEN

- 1: Werkzeug zum Verzahnen oder Abrichten eines Feinbearbeitungswerkzeugs (Honwerkzeugs)
- 2: Tragring
- 3: Tragringöffnung
- 4: Stirnseite des Tragrings 2
- 5: Stützelelement (umlaufender Absatz)
- 6: Ringelement
- 7: Absatzfläche des Stützelements 5
- 8: dem Stützelement 5 zugewandten Innenumfangsfläche 8 des Tragrings 2
- 9: Innenverzahnung des Ringelements 6
- 10: Zähne der Innenverzahnung 9
- 11: Schneiden der Zähne 10
- 12: Ringsegmente
- 13,14: Schmalseiten der Ringsegmente
- 15: Trennfugen zwischen den Ringsegmenten 13,14
- 16: Zahnlücke zwischen zwei benachbarten Zähnen 10
- 17: Klemmring

- D: Dicke des Ringelements 6
- L: zentrale Längsachse des Werkzeugs 1
- T: Tiefe der Absatzfläche 7

## Patentansprüche

1. Werkzeug zum Verzahnen oder Abrichten eines eine Außenverzahnung aufweisenden Feinbearbeitungswerkzeugs für die Feinbearbeitung von Werkstücken, wobei das Werkzeug (1) ringförmig ausgebildet ist und eine Innenverzahnung (9) aufweist, deren Zähne (10) beim Verzahnungs- oder Abrichtvorgang mit der Außenverzahnung des zu verzahnenden oder abzurichtenden Feinbearbeitungswerkzeugs in Eingriff kommen, und wobei das Werkzeug (1) eine durch den Mittelpunkt der von ihm umgrenzten Öffnung (3) verlaufende zentrale Längsachse (L) aufweist, **dadurch gekennzeichnet, dass** die Innenverzahnung (9) an einem Ringelement (6) ausgebildet ist, das aus einem Diamantwerkstoff gefertigt ist, dessen parallel zur zentralen Längsachse (L) gemessene Dicke (D) höchstens 5 mm beträgt, **dass** die Zähne (10) der Innenverzahnung (9) Schneiden (11) aufweisen, mit denen sie bei der Verzahnungs- oder Abrichtbearbeitung Material des Feinwerkzeugs abtragen, und **dass** das Ringelement (6) von einem Tragring (2) getragen ist, an dem mindestens ein der Tragringöffnung (3) des Tragrings (2) zugeordnetes Stützelement (5) vorgesehen ist, an dem das Ringelement (6) abgestützt ist und über dessen der Tragringöffnung (3) zugewandte Kante die Zähne (10) der am Ringelement (6) ausgebildeten Innenverzahnung (9) mindestens über einen Teil der Länge ihrer Schneiden (11) in Richtung der zentralen Längsachse (L) des Werkzeugs (1) hinausstehen.

2. Werkzeug nach Anspruch 1, **dadurch gekennzeichnet, dass** sein aus dem Diamantwerkstoff bestehendes Ringelement (6) aus Ringsegmenten (12) zusammengesetzt ist, die sich jeweils über einen Abschnitt des Umfangs des Ringelements (6) erstrecken.

3. Werkzeug nach Anspruch 2, **dadurch gekennzeichnet, dass** die Ringsegmente (12) identisch geformt sind.

4. Werkzeug nach Anspruch 2 oder 3, **dadurch gekennzeichnet, dass** benachbart angeordnete Ringsegmente (12) mit ihren einander zugeordneten Seitenflächen (13,14) dicht aneinander anliegen.

5. Werkzeug nach einem der Ansprüche 2 - 4, **dadurch gekennzeichnet, dass** die zwischen benachbart angeordneten Ringsegmente (12) vorhandene Trennfuge (15) jeweils im Bereich einer zwischen zwei benachbarten Zähnen (10) der Innenverzahnung (9) vorhandenen Zahnlücke (16) angeordnet ist.

6. Werkzeug nach einem der voranstehenden Ansprüche, **dadurch gekennzeichnet, dass** das Stützelement (5), an dem das die Innenverzahnung (9) aufweisende Ringelement (6) abgestützt ist, als um die Tragringöffnung (3) umlaufender Absatz ausgebildet ist.

7. Werkzeug nach Anspruch 6, **dadurch gekennzeichnet, dass** das Stützelement (5) und der Tragring (2) als ein Stück hergestellt sind.

8. Werkzeug nach einem der voranstehenden Ansprüche, **dadurch gekennzeichnet, dass** das die Innenverzahnung (9) aufweisende Ringelement (6) mit dem Stützelement (5) stoffschlüssig verbunden ist.

9. Werkzeug nach einem der voranstehenden Ansprüche, **dadurch gekennzeichnet, dass** das die Innenverzahnung (9) aufweisende Ringelement (6) mit dem Stützelement (5) kraftschlüssig verbunden ist.

## Claims

1. Tool for gear cutting or dressing a fine machining tool, which has an external toothing, for the fine machining of workpieces, wherein the tool (1) is ringshaped and has an internal toothing (9), whose teeth (10), during the gear cutting or dressing process, come into engagement with the external toothing of the fine machining tool to be cut or dressed, and wherein the tool (1) has a central longitudinal axis (L) running through the middle point of the opening (3) surrounded by it, **characterised in that** the internal toothing (9) is formed on a ring element (6) made of a diamond material, whose thickness (D), measured parallel to the central longitudinal axis (L), is at most 5 mm, **in that** the teeth (10) of the internal toothing (9) have cutting edges (11) with which they remove material of the fine tool during the gear cutting or dressing machining, and **in that** the ring element (6) is carried by a carrier ring (2) on which at least one support element (5) assigned to the carrier ring opening (3) of the carrier ring (2) is provided, on which support element the ring element (6) is supported and over whose edge facing the carrier ring opening (3) the teeth (10) of the internal toothing (9) formed on the ring element (6) protrude at least over a part of the length of their cutting edges (11) in the direction of the central longitudinal axis (L) of the tool (1).

2. Tool according to claim 1, **characterised in that** its ring element (6) consisting of the diamond material is composed of ring segments (12), which each extend over a section of the circumference of the ring element (6).

3. Tool according to claim 2, **characterised in that** the ring segments (12) are identically shaped.

4. Tool according to claim 2 or 3, **characterised in that** adjacently arranged ring segments (12) lie close to one another with their side surfaces (13, 14) assigned to one another.

5. Tool according to any one of claims 2 to 4, **characterised in that** the separating joint (15) present between adjacently arranged ring segments (12) is in each case arranged in the region of a tooth gap (16) present between two adjacent teeth (10) of the internal toothing (9).

6. Tool according to any one of the preceding claims, **characterised in that** the support element (5), on which is supported the ring element (6) having the internal toothing (9), is designed as a shoulder running around the carrier ring opening (3).

7. Tool according to claim 6, **characterised in that** the support element (5) and the carrier ring (2) are manufactured as one piece.

8. Tool according to any one of the preceding claims, **characterised in that** the ring element (6) having the internal toothing (9) is connected to the support element (5) in a materially-bonded manner.

9. Tool according to any one of the preceding claims, **characterised in that** the ring element (6) having the internal toothing (9) is connected to the support element (5) in a force-fitting manner.

## Revendications

1. Outil pour tailler ou dresser un outil d'usinage de précision, qui présente une denture extérieure, pour l'usinage de précision de pièces à usiner, l'outil (1) étant conçu en forme d'anneau et présentant une denture intérieure (9), dont les dents (10) viennent en prise avec la denture extérieure de l'outil d'usinage de précision à tailler ou à dresser lors du processus de taillage ou de dressage, et l'outil (1) présentant un axe longitudinal central (L) passant par le point central de l'ouverture (3) qu'il délimite, **caractérisé en ce que** la denture intérieure (9) est formée à un élément d'anneau (6), qui est fabriqué en un matériau de diamant, dont l'épaisseur (D), mesurée parallèlement à l'axe longitudinal central (L), est de 5 mm au maximum, **en ce que** les dents (10) de la denture intérieure (9) présentent des tranchants (11) avec lesquels elles enlèvent du matériau de l'outil de précision lors de l'usinage par taillage ou dressage et **en ce que** l'élément d'anneau (6) est porté par un anneau porteur (2) auquel est prévu au moins un élément de soutien (5) associé à l'ouverture d'anneau porteur (3) de l'anneau porteur (2), l'élément d'anneau (6) prenant appui contre l'élément de soutien et au-delà du bord de l'élément de soutien (5) tourné vers l'ouverture d'anneau porteur (3), les dents (10) de la denture intérieure (9) formée à l'élément d'anneau (6) dépassent d'au moins une partie de la longueur de leurs tranchants (11) dans la direction de l'axe longitudinal central (L) de l'outil (1).

2. Outil selon la revendication 1, **caractérisé en ce que** son élément d'anneau (6) composé du matériau de diamant est assemblé à partir de segments annulaires (12) qui s'étendent chacun sur une section de la circonférence de l'élément d'anneau (6).

3. Outil selon la revendication 2, **caractérisé en ce que** les segments annulaires (12) sont de forme identique.

4. Outil selon la revendication 2 ou 3, **caractérisé en ce que** des segments annulaires (12) agencés adjacents sont en contact étroit les uns avec les autres avec leurs surfaces latérales (13, 14) mutuellement associées.

5. Outil selon l'une des revendications 2 - 4, **caractérisé en ce que** le joint de séparation (15) existant entre des segments annulaires (12) agencés adjacent est respectivement agencé dans la zone d'un entredent (16) existant entre deux dents adjacentes (10) de la denture intérieure (9).

6. Outil selon l'une des revendications précédentes, **caractérisé en ce que** l'élément de soutien (5), contre lequel l'élément d'anneau (6) présentant la denture intérieure (9) prend appui, est conçu en tant qu'épaulement entourant l'ouverture d'anneau porteur (3).

7. Outil selon la revendication 6, **caractérisé en ce que** l'élément de soutien (5) et l'anneau porteur (2) sont fabriqués en une pièce.

8. Outil selon l'une des revendications précédentes, **caractérisé en ce que** l'élément d'anneau (6) présentant la denture intérieure (9) est relié, par liaison de matière, à l'élément de soutien (5).

9. Outil selon l'une des revendications précédentes, **caractérisé en ce que** l'élément d'anneau (6) présentant la denture intérieure (9) est relié, par liaison de force, à l'élément de soutien (5).
